# FASCICULE DE BREVET EUROPEEN

(11) **EP 0 647 851 B1**
(45) Date de publication et mention de la délivrance du brevet: **15.07.1998**
(21) Numéro de dépôt: 94402238.3
(22) Date de dépôt: 05.10.1994
(51) Int. Cl.: G01P 3/487, G01P 3/44

(54) **Elément codeur pour roulement muni d'un ensemble capteur d'informations et roulement comportant un tel élément codeur**
Kodierelement mit Messaufnehmer und damit angestattetem Lager
Encoder with sensor and bearing therewith

(30) Priorité: 06.10.1993 FR 9311924
(43) Date de publication de la demande: 12.04.1995
(73) Titulaire: SKF FRANCE, F-92142 Clamart Cédex (FR)
(72) Inventeur: Caillaut, Claude, F-37390 Saint-Roch (FR); Rigaux, Christian, F-37260 Artannes-sur-Indre (FR); Lhote, Pascal, F-37540 Saint-Cyr-sur-Loire (FR); Houdayer, Christophe, F-37000 Tours (FR)
(74) Mandataire: Casalonga, Axel

(56) Documents cités:
- EP-A- 0 250 275
- EP-A- 0 437 796
- EP-A- 0 522 933
- FR-A- 2 664 691
- US-A- 4 795 278

## Description

La présente invention concerne le domaine des capteurs d'informations pour roulement. Elle concerne plus particulièrement un élément codeur destiné à coopérer avec un capteur de type actif tel que sondes à effet Hall ou magnétorésistances, en vue de détecter la vitesse de rotation du roulement.

Les capteurs d'informations pour roulement sont couramment utilisés comme dispositifs de détection de la vitesse de rotation du roulement pour un véhicule automobile équipé d'un système de freinage anti-blocage de roues ou ABS. Les ensembles capteurs d'informations comprennent un élément codeur rendu solidaire d'une bague tournante du roulement et un capteur monté fixe par rapport à une bague non tournante du roulement. L'élément codeur et le capteur sont disposés en regard l'un de l'autre, axialement ou radialement, avec un faible entrefer. L'élément codeur entraîné en rotation par la bague tournante crée des variations de champ magnétique. Le capteur détecte ces variations de champ magnétique en les transformant en un signal électrique dont la fréquence est représentative de la vitesse de rotation du roulement. Le signal issu du capteur est transmis via un câble électrique à une unité d'exploitation et de commande du véhicule.

On connaît par le document FR-A-2 599 794 un ensemble capteur d'informations pour roulement dans lequel l'élément codeur est réalisé sous forme d'un anneau multipolaire solidaire de la bague tournante du roulement et défilant en rotation devant un capteur actif de type sonde à effet Hall. Cependant la fabrication d'un anneau multipolaire, notamment lorsque l'anneau comporte un grand nombre de pôles magnétiques alternés, est relativement délicate sur le plan de la précision de la magnétisation. La précision de la magnétisation de l'anneau multipolaire est essentielle pour assurer un bon signal de détection qui nécessite une dispersion aussi faible que possible sur les caractéristiques dimensionnelles et magnétiques des pôles de l'anneau multipolaire.

La présente invention a pour objet de remédier aux inconvénients de la technique précitée en proposant un élément codeur comportant des zones magnétisées présentant très peu de dispersion aussi bien du point de vue dimensionnel que du point de vue des caractérstiques magnétiques.

Un autre objet de l'invention est de réaliser un élément codeur composite dont la magnétisation est simple.

L'élément codeur pour roulement à capteur d'informations, selon l'invention, comprend une cible annulaire en matériau ferromagnétique et un anneau bipolaire aimanté axialement et rendu solidaire de la cible ferromagnétique.

La cible ferromagnétique est pourvue d'une portée cylindrique pour être montée sur la bague tournante du roulement et d'une partie radiale en forme de disque plan munie de fenêtres ou encoches de taille identique et réparties régulièrement le long d'un trajet circulaire.

L'anneau bipolaire à aimantation axiale présente une embase pleine et des dents axiales régulièrement réparties sur l'embase. L'extrémité libre des dents axiales présente une magnétisation de même polarité et constituent de préférence les pôles S. L'embase annulaire pleine présente alors à son côté libre une magnétisation de polarité N. L'anneau bipolaire est rendu solidaire de la partie radiale de la cible ferromagnétique, les dents axiales de l'anneau bipolaire pénétrant axialement dans les fenêtres ou encoches de la cible.

Le capteur de l'ensemble capteur d'informations est monté fixe par rapport à la bague non tournante du roulement et orienté axialement face à la partie radiale de la cible ferromagnétique dont les fenêtres ou encoches encadrent les dents axiales aimantées de l'anneau bipolaire. Ainsi, une rotation de la bague tournante du roulement entraîne un défilement de l'élément codeur devant le capteur, l'extrémité libre aimantée des dents axiales de l'anneau bipolaire et les barrettes radiales ferromagnétiques qui séparent les fenêtres de la cible passant alternativement devant l'élément capteur. Une variation de champ magnétique ainsi provoquée est détectée par le capteur qui fournit à son tour un signal électrique dont les fréquences d'impulsions sont représentatives de la vitesse de rotation de l'élément codeur.

Grâce à une telle structure composite de l'élément codeur, il est facile d'obtenir les fenêtres ou encoches sur la cible ferromagnétique avec précision, par exemple par emboutissage d'une tôle d'acier ferromagnétique. Il est également facile d'obtenir une magnétisation axiale pour obtenir l'anneau bipolaire avec les dents axiales présentant la même polarité magnétique. La précision mécanique de découpe des fenêtres de la cible permet d'assurer également la précision dimensionnelle de chaque pâle constitué par chaque dent axiale aimantée (fenêtres de taille identique et régulièrement réparties sur un trajet circulaire).

De même, le matériau ferromagnétique de la cible constitue un circuit magnétique pour les lignes de champ magnétique, ce qui supprime la dispersion des lignes de champ magnétique au niveau des barrettes radiales séparant les fenêtres de la cible. Autrement dit, les lignes de champ magnétique ne s'échappent pas de ces barrettes ferromagnétiques vers le capteur. La magnétisation axiale de l'anneau bipolaire garantit quant à elle une valeur constante de champ magnétique au niveau de chaque fenêtre. La précision et la qualité de détection est ainsi améliorée puisque la différence de niveau du champ magnétique en regard d'une dent axiale aimantée et d'une barrette ferromagnétique de la cible est accentuée de cette manière et se traduit par des coupures très franches entre ces zones adjacentes.

L'invention sera mieux comprise à l'étude de la description détaillée de quelques modes de réalisation pris à titre nullement limitatif et illustrés par des dessins annexés, sur lesquels :
la figure 1 est une vue schématique en coupe axiale d'un roulement équipé d'un ensemble capteur d'informations selon l'invention,
la figure 2 est une vue de détail de la figure 1 montrant l'ensemble capteur d'informations de l'invention,
la figure 3 est une vue partielle éclatée de l'élément codeur illustré sur la figure 2,
les figures 4 à 7b montrent schématiquement plusieurs modes de réalisation de l'élément codeur de l'invention,
les figures 8 et 9 montrent deux configurations particulières de l'élément codeur de l'invention intégré dans un roulement, et
les figures 10a et 10b montrent le résultat d'une modélisation des lignes de champ magnétique obtenu à l'aide de l'élément codeur de l'invention.

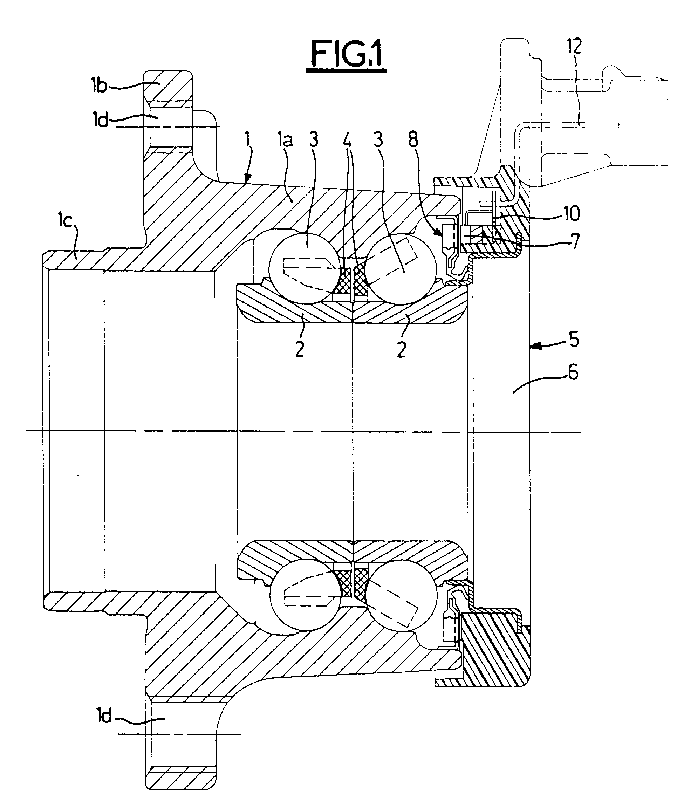

Sur la figure 1 est représenté un roulement pour roues de véhicules automobiles. Le roulement comprend une bague extérieure tournante 1, deux demi-bagues intérieures non tournantes 2 et deux rangées de billes de roulement 3 disposées entre les bagues tournante 1 et non tournante 2 et espacées circonférentiellement par une cage annulaire 4. La bague extérieure tournante 1 présente une portion sensiblement cylindrique 1a de roulement, un collet radial 1b et une portée tubulaire 1c à l'opposé de la portion de roulement 1a par rapport au collet radial 1b. Une roue non représentée est montée autour de la portée tubulaire 1c au moyen de boulons non représentés traversant les trous taraudés 1d du collet radial 1b. Un capteur d'informations 5 comprenant un porte-capteur 6 annulaire en matière plastique, un capteur 7 et un élément codeur 8, est monté sur un côté du roulement.

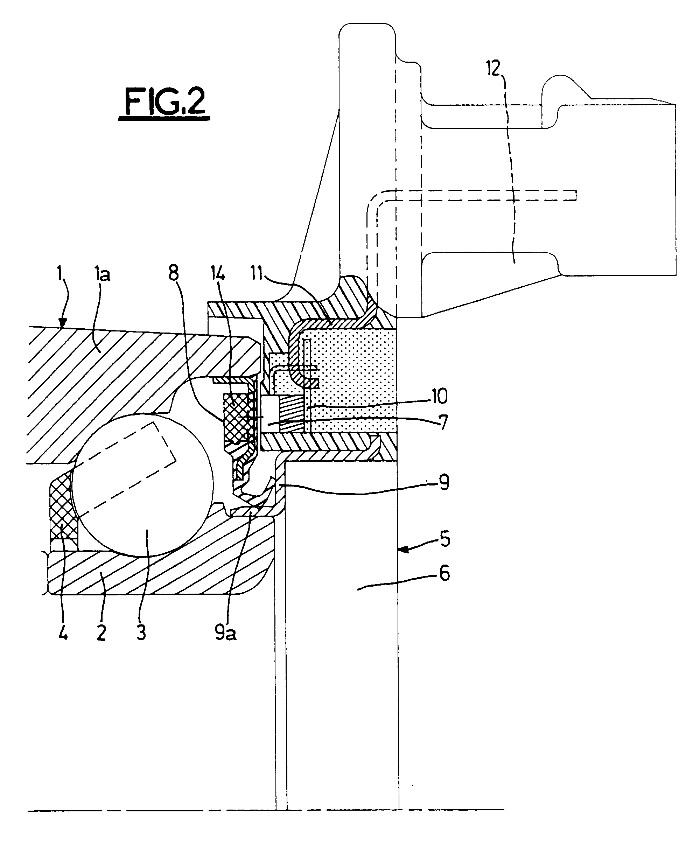

Comme on peut le voir sur la figure 2, le porte-capteur 5 comprend un support métallique annulaire 9 en tôle d'acier qui comprend une portée cylindrique 9a de montage emmanchée axialement à une extrémité de la bague intérieure non tournante 2. Le capteur 7 est relié à un circuit intégré 10, lequel est relié à son tour par un câble électrique 11 à un connecteur électrique 12. L'élément codeur 8 est emmanché axialement dans une extrémité de la bague extérieure tournante 1 et entraîné en rotation par cette dernière pour créer des perburbations de champ magnétique dans le capteur 7 qui est par exemple une sonde à effet Hall.

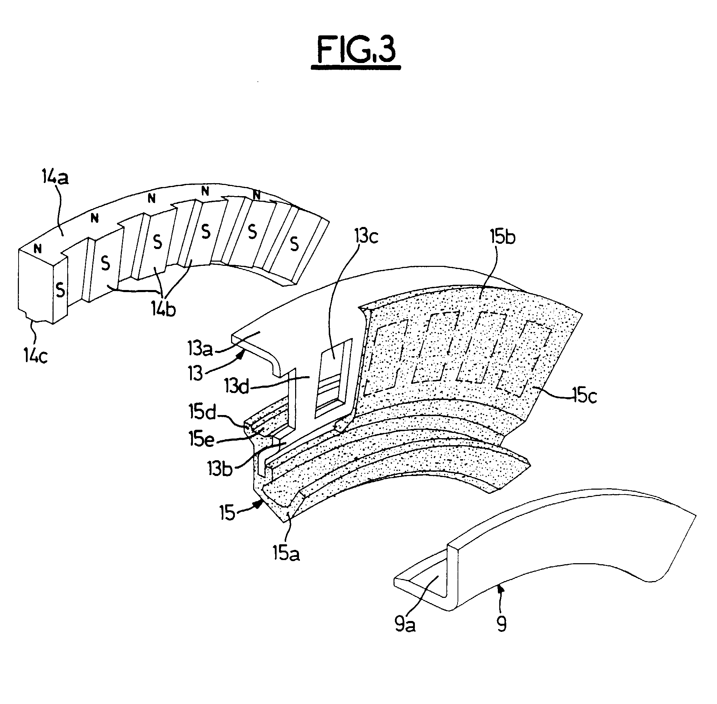

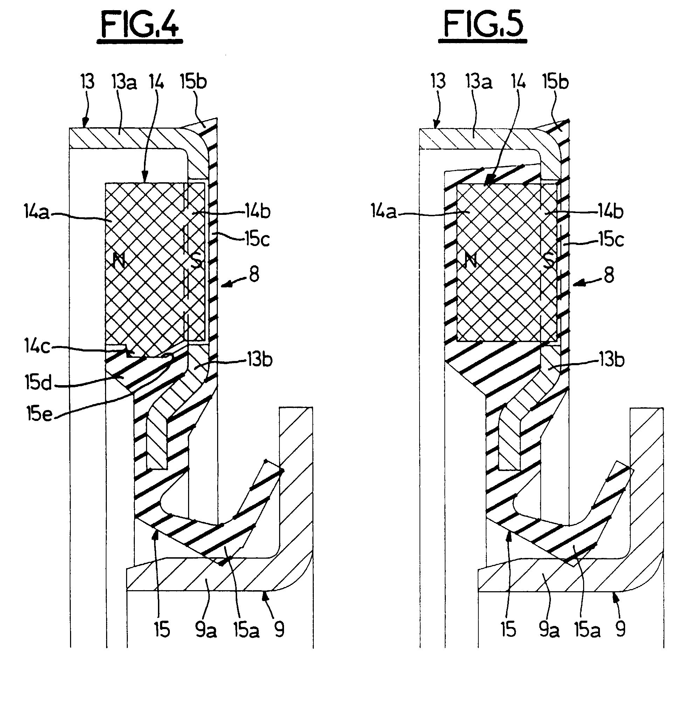

La structure de l'élément codeur 8 selon le mode de réalisation illustré sur les figures 1 et 2 est représentée de façon plus détaillée dans les figures 3 et 4. L'élément codeur 8 est constitué essentiellement d'une cible métallique 13 et d'un anneau bipolaire 14. De préférence, l'élément codeur 8 comprend également une garniture d'étanchéité 15. La cible métallique 13 est réalisée en un matériau ferromagnétique sous forme d'une tôle pliée annulaire. La cible 13 comprend une portée cylindrique 13a qui peut être emmanchée axialement dans la bague tournante 1 du roulement, et une partie radiale 13b sous forme d'un disque plan pourvu d'une pluralité de fenêtres 13c sensiblement rectangulaire, de taille identique l'une par rapport à l'autre et séparées les unes des autres par des barrettes radiales 13d qui présentent toutes la même largeur circonférentielle.

Le bord intérieur de la partie radiale 13b de la cible 13 est légèrement courbé et sert d'ancrage pour le surmoulage de la garniture d'étanchéité 15. La garniture d'étanchéité 15 présente un joint d'étanchéité intérieur 15a frottant sur le support métallique 9 du porte-capteur 6 (figure 2), un joint statique extérieur 15b coopérant avec l'extrémité de la bague tournante 1 du roulement (figure 2), un voile radial continu 15c reliant les joints intérieur 15a et extérieur 15b, et une partie-support 15d sous forme d'une portée axiale avec une rainure périphérique annulaire 15e.

L'anneau bipolaire 14 pourra être réalisé dans tout matériau susceptible de constituer un aimant permanent après magnétisation : matériau fritté, élastomère chargé de ferrite, matière plastique chargée de ferrite (plastoferrite). L'anneau bipolaire 14 présente une embase pleine 14a orientée vers l'intérieur du roulement et une pluralité de dents axiales 14b dirigées vers le capteur 7. L'assemblage entre l'anneau bipolaire 14 et la cible 13 se traduit par la pénétration des dents axiales 14b dans les fenêtres 13c, les dents axiales 14b présentant sensiblement la même dimension que les fenêtres 13c pour être ajustées. L'anneau bipolaire 14 est aimanté axialement avec les pôles S sur les créneaux axiaux et les pâles N du côté de l'embase pleine 14a.

Dans le mode illustré sur les figures 1 à 4, l'anneau bipolaire 14 est réalisé séparément de la cible métallique 13. Le bord intérieur de l'anneau bipolaire 14 présente un bourrelet annulaire 14c ou des ergots qui viennent s'encliqueter dans la rainure annulaire 15e de la garniture d'étanchéité 15 lors du montage de l'anneau 14 sur la cible 13. Il va de soi que les autres moyens appropriés de fixation de l'anneau bipolaire 14 sur la cible 13 peuvent être utilisés (collage, enrobage dans un matériau de liaison etc.).

Grâce à la garniture d'étanchéité 15 surmoulée sur la cible 13 l'anneau bipolaire 14 est protégé efficacement du milieu extérieur.

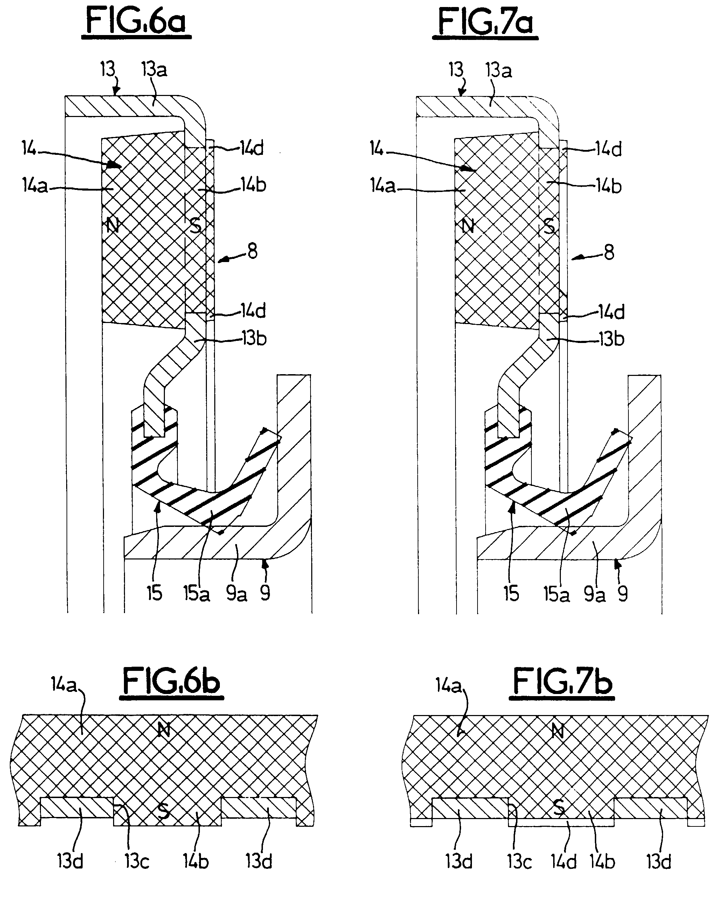

La figure 5 montre un mode de réalisation de l'élément codeur 8 A la différence du mode précédemment décrit, le surmoulage par la garniture d'étanchéité 15 est effectué après le montage de l'anneau bipolaire 14 sur la cible métallique 13, la garniture d'étanchéité 15 enveloppant complètement l'anneau bipolaire 14 et contribue à lc fixation de l'anneau bipolaire 14 sur la cible 13. A cette différence près, les modes illustrés sur les figures 4 et 5 sont pratiquement identiques.

Dans le cas où on utilise une matière plastique chargée de ferrite ou un élastomère chargé de ferrite pour réaliser l'anneau 14, il est possible de surmouler directement l'anneau 14 sur la cible métallique 13 de telle sorte que les dents axiales 14b soient noyées dans les fenêtres 13c ou fassent légèrement saillie axialement par rapport à celles-ci (figures 6a, 6b, 7a, 7b). Dans ce cas, la magnétisation axiale de l'anneau 14 est réalisée après l'opération de surmoulage sur la cible 13. La garniture d'étanchéité 15 se réduit alors au joint frottant intérieur 15a. Afin de permettre la solidarisation axiale entre l'anneau 14 et la cible 13, les dents axiales 14b surmoulées dans les fenêtres 13c peuvent présenter un débordement radial 14d par rapport aux fenêtres de la cible 13.

Le mode de réalisation illustré sur les figures 6a et 6b présente les dents axiales 14b en saillie axiale par rapport à la partie radiale de la cible 13, les bords inférieur et supérieur de l'extrémité libre des dents axiales 14b constituant le débordement radial 14d d'accrochage. Dans le mode de réalisation illustré sur les figures 7a et 7b, les dents axiales 14b ne font pas saillie par rapport à la partie radiale de la cible 13 et seuls des prolongements supérieur et inférieur de l'extrémité libre des dents axiales 14b font saillie axialement et radialement par rapport aux fenêtres 13c de la cible 13 pour constituer le débordement radial 14d d'accrochage.

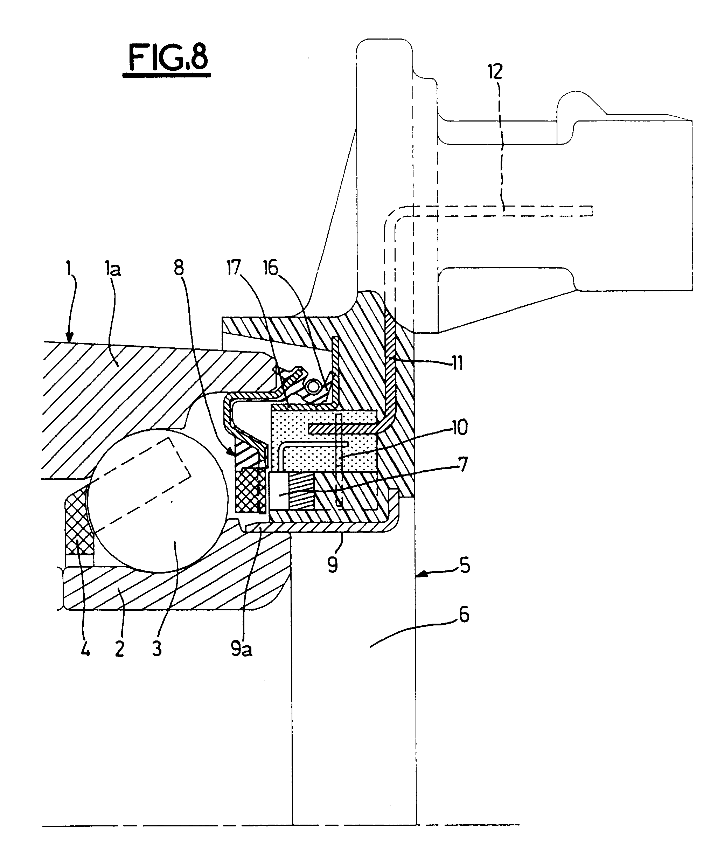

La figure 8 montre une variante de l'élément codeur par rapport à celui illustré sur les figures 1 à 4. Dans ce mode de réalisation, le joint frottant 16 se trouve en contact avec un déflecteur métallique annulaire 17 qui fait partie du porte-capteur 6 dans le prolongement de l'extrémité de la bague tournante extérieure 1 du roulement. Une telle configuration protège davantage l'ensemble capteur d'informations 5 vis-à-vis du milieu extérieur grâce au joint frottant 16.

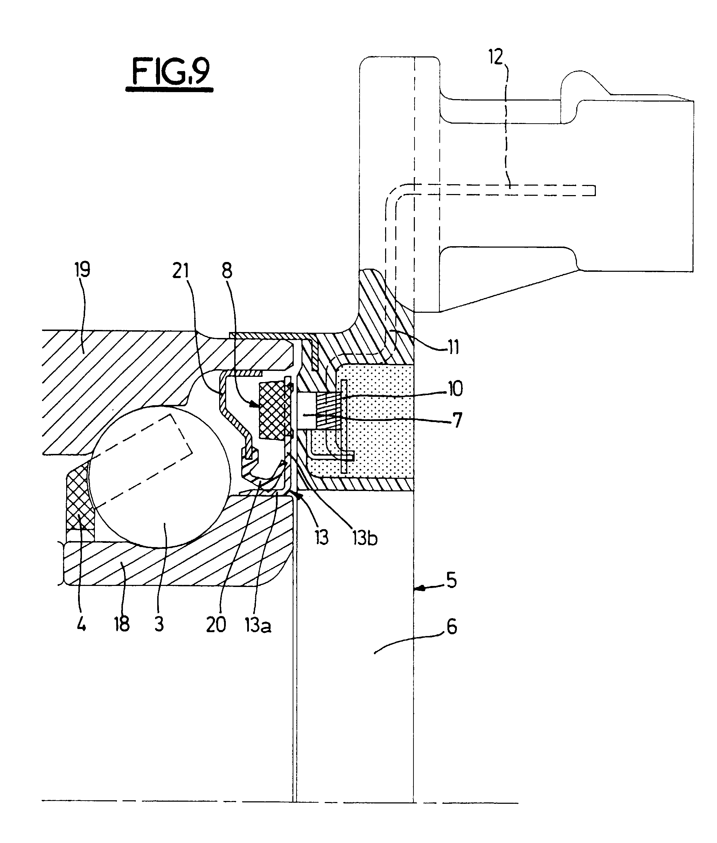

La figure 9 illustre un autre mode de réalisation de l'élément codeur 8 pour un roulement dont la bague intérieure 18 est tournante et dont la bague extérieure 19 est fixe. La cible métallique 13 présente une portée cylindrique de montage 13a et une partie radiale 13b dépourvue de garniture d'étanchéité. Le joint d'étanchéité 20 est surmoulé au rebord intérieur d'un flasque 21 monté dans la bague extérieur non tournante 19 du roulement. Le joint d'étanchéité 20 est en contact de frottement avec la cible métallique 13. L'anneau bipolaire 14 est surmoulé directement sur la cible 13 (similaire à la figure 7).

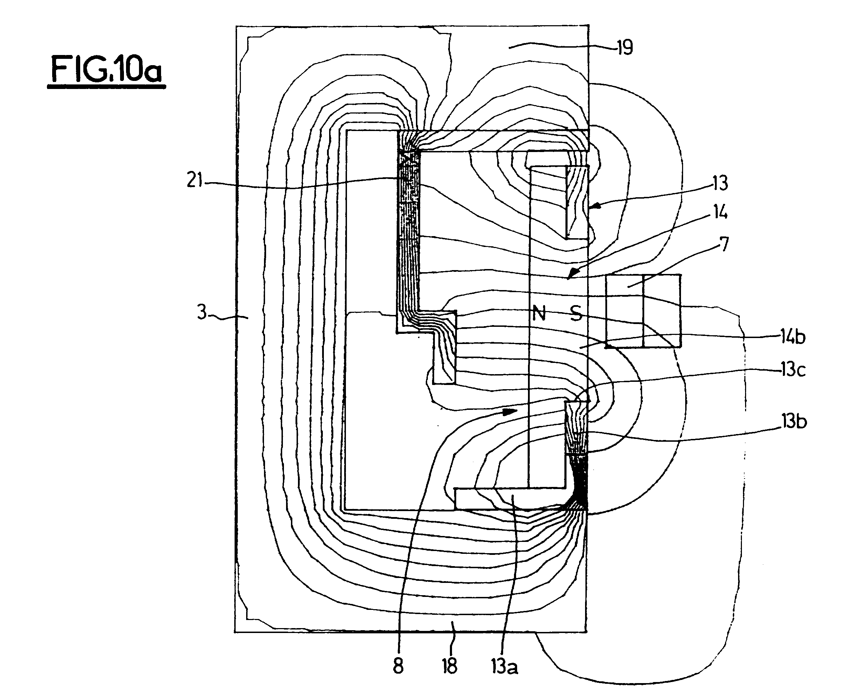

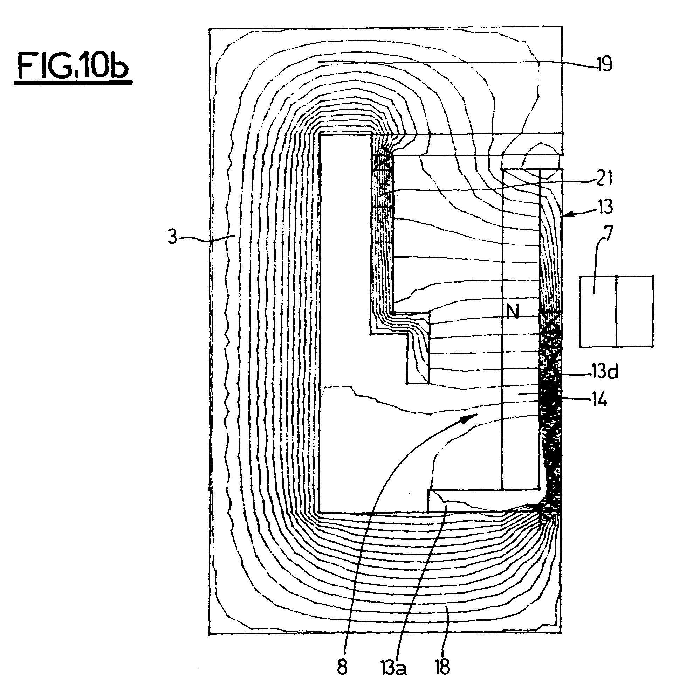

Les figures 10a et 10b montrent une modélisation des lignes de champ magnétique générées par l'élément codeur du type représenté sur la figure 9 selon l'invention. Les autres modes de réalisation illustrés et décrits précédemment fonctionnent de façon tout à fait similaire.

Comparé à la figure 9, le circuit magnétique référencé 19, 3, 18 est constitué par la bague extérieure non tournante 19, les billes de roulement 3 et la bague intérieure tournante 18 du roulement. Le support métallique 21 de joint d'étanchéité est également conducteur magnétique de manière similaire à la cible 13 ferromagnétique.

Lorsque le capteur 7 se trouve en regard d'une fenêtre 13c, c'est-à-dire d'une dent axiale 14b de l'anneau bipolaire 14, les lignes de champ magnétique, représentées dans un plan radial passant par le capteur 7, sont indiquées sur la figure 10a. L'intensité du champ magnétique détectée par le capteur 7 est à sa valeur maximale.

Dans la disposition illustrée sur la figure 10b, le capteur 7 se trouve en regard d'une barrette radiale 13d séparant deux fenêtres consécutives 13c de la cible ferromagnétique 13. Du fait des caractéristiques conductrices magnétiques de la barrette ferromagnétique 13d, les lignes de champ magnétique sont véhiculées dans la barrette ferromagnétique 13d au lieu de s'échapper vers l'extérieur. Il en résulte que le capteur 7 ne détecte pas de présence du champ magnétique.

La mise en rotation de l'élément codeur 8 constitué de la cible 13 et de l'anneau bipolaire 14 entraîne donc une variation significative de champ magnétique au niveau du capteur 7 disposé axialement en regard de l'élément codeur 8. En effet, le capteur 7 est soumis alternativement au champ magnétique émis par les dents axiales polarisées 14b traversant les fenêtres 13c et à l'absence de champ magnétique au niveau des barrettes radiales 13d de la cible. Le capteur 7 délivre donc un signal électrique dont la fréquence d'impulsions est proportionnelle à la vitesse de rotation de l'élément codeur 8.

L'aimantation axiale de l'anneau 14 est particulièrement facile à réaliser puisqu'une simple aimantation bipolaire axiale de l'anneau suffit pour magnétiser de façon identique tous les dents axiales 14b, ce qui garantit également une faible dispersion de la valeur du champ magnétique le long de la circonférence de l'anneau. La structure de l'élément codeur 8 selon l'invention procure d'autres avantages, notamment :
- une coupure très franche des lignes de champ magnétique entre les zones situées au droit des fenêtres 13c et au droit des barrettes radiales 13d de séparation des fenêtres de la cible 13;
- des caractérisiques dimensionelles et magnétiques constantes au niveau de chaque fenêtre 13c de la cible grâce à la taille identique de ces fenêtres et de la largeur constante des barrettes 13d de séparation des fenêtres, ce qui permet d'obtenir un signal de bonne qualité, stable et fiable.

En outre, l'anneau bipolaire 14 étant axialement imbriqué dans la cible ferromagnétique 13, l'épaisseur de la tôle servant à réaliser ladite cible n'augmente pas l'encombrement axial de l'élément codeur 8 dans son ensemble.

## Revendications

1. Elément codeur (8) pour roulement muni d'un ensemble capteur d'informations, ledit élément codeur étant rendu solidaire d'une bague tournante (1, 18) du roulement et coopérant avec un capteur (7) dudit ensemble capteur d'informations pour détecter la vitesse de rotation du roulement, caractérisé en ce qu'il comprend une cible annulaire (13) en matériau ferromagnétique pourvue d'une portée cylindrique (13a) de montage sur la bague tournante du roulement et d'une partie radiale (13b) en forme de disque plan avec des fenêtres (13c) ou encoches de taille identique et réparties régulièrement le long d'un trajet circulaire, et un anneau bipolaire (14) aimanté axialement et pourvu de dents axiales (14b) réparties régulièrement et circonférentiellement qui pénètrent axialement dans lesdites fenêtres ou encoches de la cible, l'extrémité libre des dents axiales présentant une magnétisation de même polarité.

2. Elément codeur selon la revendication 1, caractérisé en ce qu'il comprend en outre une garniture d'étanchéité (15) surmoulée sur ledit anneau bipolaire (14) et la partie radiale (13b) de la cible ferromagnétique (13).

3. Elément codeur selon la revendication 1, caractérisé en ce qu'il comprend une garniture d'étanchéité (15) surmoulée sur la partie radiale (13b) de la cible ferromagnétique (13) et présentant une portée axiale (15d) pourvue d'une rainure annulaire circonférentielle (15e) pour permettre le montage par encliquetage de l'anneau bipolaire (14) dont le rebord intérieur est pourvu d'un bourrelet annulaire (14c) ou d'ergots coopérant avec la rainure annulaire de la garniture d'étanchéité.

4. Elément codeur selon l'une des revendications précédentes, caractérisé en ce que l'anneau bipolaire (14) est collé sur la cible ferromagnétique (13).

5. Elément codeur selon la revendication 1, caractérisé en ce que l'anneau bipolaire (14) est directement surmoulé sur la cible ferromagnétique (13), l'extrémité libre des dents axiales (14b) présentant des débordements radiaux (14d) de solidarisation axiale de l'anneau bipolaire.

6. Elément codeur selon l'une des revendications précédentes, caractérisé en ce que les fenêtres (13c) sont rectangulaires et de même taille.

7. Roulement muni d'un ensemble capteur d'informations avec une bague tournante extérieure (1) équipée d'un élément codeur (8) selon l'une des revendications précédentes.

8. Roulement muni d'un ensemble capteur d'informations avec une bague tournante intérieure (18) équipée d'un élément codeur (8) selon l'une des revendications 1 à 6.

## Claims

1. Encoder element (8) for a rolling-contact bearing equipped with an information sensor assembly, the said encoder element being rendered integral with a rotating race (1, 18) of the bearing and interacting with a sensor (7) of the said information sensor assembly in order to detect the speed of rotation of the bearing, characterized in that it comprises an annular target (13) made of ferromagnetic material provided with a cylindrical bearing surface (13a) for mounting on the rotating race of the bearing and with a flat disc-shaped radial part (13b) with windows (13c) or slots of identical size and uniformly distributed along a circular path, and an axially magnetized bipolar ring (14) provided with axial teeth (14b) which are uniformly and circumferentially distributed and which penetrate axially into the said windows or slots in the target, the free end of the axial teeth exhibiting a magnetization of the same polarity.

2. Encoder element according to Claim 1, characterized in that it further comprises a seal (15) overmoulded onto the said bipolar ring (14) and the radial part (13b) of the ferromagnetic target (13).

3. Encoder element according to Claim 1, characterized in that it comprises a seal (15) overmoulded onto the radial part (13b) of the ferromagnetic target (13) and exhibiting an axial bearing surface (15d) provided with a circumferential annular groove (15e) in order to allow the mounting, by snap-fitting, of the bipolar ring (14), the inner rim of which is provided with an annular bead (14c) or with lugs interacting with the annular groove in the seal.

4. Encoder element according to one of the preceding claims, characterized in that the bipolar ring (14) is bonded onto the ferromagnetic target (13).

5. Encoder element according to Claim 1, characterized in that the bipolar ring (14) is directly overmoulded onto the ferromagnetic target (13), the free end of the axial teeth (14b) exhibiting radial overhangs (14d) for rendering them axially integral with the bipolar ring.

6. Encoder element according to one of the preceding claims, characterized in that the windows (13c) are rectangular and of the same size.

7. Bearing equipped with an information sensor assembly with outer rotating race (1) which race is equipped with an encoder element (8) according to one of the preceding claims.

8. Bearing equipped with an information sensor assembly with an inner rotating race (18) which race is equipped with an encoder element (8) according to one of Claims 1 to 6.

## Patentansprüche

1. Codegeberelement (8) für ein Lager, das mit einem Informationsaufnehmereinrichtung versehen ist, wobei der Codegeberelement an einem umlaufenden Ring (1,18) des Lagers fest angebracht ist, und mit einem Aufnehmer (7) der Informationsaufnehmereinrichtung zusammenwirkt, um die Drehzahl des Lagers zu erfassen, dadurch gekennzeichnet, dass sie eine ringförmige Scheibe (13) aus ferromagnetischem Material aufweist, die mit einer zylindrischen Sitzfläche (13a) zur Montage an dem sich drehenden Ring des Lagers versehen ist und von der ein radial sich erstreckender Abschnitt (13b) die Gestalt einer ebenen Scheibe mit Fenstern (13c) oder Vertiefungen mit jeweils identischem Zuschnitt aufweist, die gleichmäßig längs einer Kreisbahn verteilt sind, und dass ein bipolarer Ring (14) vorgesehen ist, der axial magnetisiert ist und axial sich erstreckende Zähne (14b) trägt, die in Umfangsrichtung äquidistant verteilt sind und die in axialer Richtung in die Fenster oder Vertiefungen der Scheibe hineinragen, wobei die freien Enden der axial sich erstreckenden Zähne Magnetisierungen mit der gleichen Polarität aufweisen.

2. Codegeberelement nach Anspruch 1, dadurch gekennzeichnet, dass zu ihm ferner eine Dichteinrichtung (15) gehört, die auf den bipolaren Ring (14) und den radial sich erstreckenden Bereich (13b) der ferromagnetischen Scheibe (14) aufgespritzt ist.

3. Codegeberelement nach Anspruch 1, dadurch gekennzeichnet, dass zu ihm eine Dichteinrichtung (15) gehört, die auf den radial sich erstreckenden Abschnitt (13b) der ferromagnetischen Scheibe (13) aufgespritzt ist und die eine axiale Sitzfläche (15d) aufweist, die mit einer ringförmigen Umfangsnut (15e) versehen ist, um die Rastmontage des bipolaren Rings (14) zu ermöglichen, dessen Innenrand mit einer ringförmigen Wulst (14c) oder Vorsprüngen versehen ist, die mit der Ringnut der Dichtanordnung zusammenwirken.

4. Codegeberelement nach einem der vorhergehenden Ansprüche, dadurch gekennzeichnet, dass der bipolare Ring (14) an der ferromagnetischen Scheibe (13) festgeklebt ist.

5. Codegeberelement nach Anspruch 1, dadurch gekennzeichnet, dass der bipolare Ring (14) unmittelbar auf die ferromagnetische Scheibe (13) aufgespritzt ist, wobei die freien Enden der axial sich erstreckenden Zähne (14b) radial sich erstreckende umgreifende Fortsätze (14d) zur axialen Befestigung des bipolaren Rings bilden.

6. Codegeberelement nach einem der vorhergehenden Ansprüche, dadurch gekennzeichnet, dass die Fenster (13c) rechteckig sind und denselben Zuschnitt aufweisen.

7. Mit einer Informationsaufnehmereinrichtung versehenes Lager mit einem drehbaren Außenring (1), der mit einem Codegeberelement (8) nach einem der vorhergehenden Ansprüche versehen ist.

8. Mit einer Informationsaufnehmereinrichtung versehenes Lager mit einem drehbaren Innenring (18), der mit einem Codegeberelement (8) nach einem der Ansprüche 1 bis 6 versehen ist.
